(19) Europäisches Patentamt
European Patent Office
Office européen des brevets

(11) **EP 3 464 861 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **17726638.4**

(22) Anmeldetag: **31.05.2017**

(51) Int Cl.:
*F02D 41/24* (2006.01)      *F02D 41/12* (2006.01)
*F02D 41/14* (2006.01)      *F02B 75/04* (2006.01)
*F02D 15/00* (2006.01)

(86) Internationale Anmeldenummer:
**PCT/EP2017/063116**

(87) Internationale Veröffentlichungsnummer:
**WO 2017/207607 (07.12.2017 Gazette 2017/49)**

(54) **VERFAHREN UND SYSTEM ZUR DIAGNOSE UND/ODER STEUERUNG EINER HUBKOLBENMASCHINE MIT EINEM VARIABLEN VERDICHTUNGSVERHÄLTNIS**

METHOD AND SYSTEM FOR DIAGNOSING AND/OR CONTROLLING A RECIPROCATING ENGINE HAVING A VARIABLE COMPRESSION RATIO

PROCÉDÉ ET SYSTÈME DE DIAGNOSTIC ET/OU DE COMMANDE D'UN MOTEUR À PISTONS ALTERNATIFS AYANT UN RAPPORT VOLUMÉTRIQUE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2016   AT 504862016**

(43) Veröffentlichungstag der Anmeldung:
**10.04.2019   Patentblatt 2019/15**

(73) Patentinhaber: **AVL List GmbH
8020 Graz (AT)**

(72) Erfinder: **WILLIAMS, Philip
8075 Hart bei Graz (AT)**

(74) Vertreter: **Breuer Friedrich Hahner
Patentanwälte PartG mbB
Brienner Straße 1
80333 München (DE)**

(56) Entgegenhaltungen:
DE-A1-102014 203 033      DE-B3-102012 212 885
JP-A- 2014 227 892      US-A1- 2016 069 768
US-B1- 6 453 854

**Beschreibung**

Die Erfindung betrifft ein Verfahren und ein System zur Diagnose und/oder Steuerung einer Hubkolbenmaschine mit einem variablen Verdichtungsverhältnis sowie ein Kraftfahrzeug, insbesondere einen Personenkraftwagen, mit dem System.

Aus dem Stand der Technik sind Hubkolbenmaschinen mit variablen Verdichtungsverhältnissen bekannt, wobei als Verdichtungsverhältnis $\varepsilon$ vorliegend insbesondere in fachüblicher Weise das Verhältnis der Summe von (Kolben)Hubvolumen $V_h$ und Kompressions- bzw. Restvolumen $V_k$ zu dem Kompressions- bzw. Restvolumen $V_k$ alleine verstanden wird

$$\left( \varepsilon = \frac{V_h + V_k}{V_k} \right).$$

Hierdurch kann eine Funktionalität der Hubkolbenmaschinen verbessert, insbesondere an unterschiedliche Lastbereiche adaptiert, werden.

Die WO 2015/055582 A2 schlägt hierzu längenverstellbare Pleuel(stangen) vor.

Die DE 10 2014 203 033 A1 betrifft ein Verfahren zum Bestimmen eines Verdichtungsverhältnisses in einem Zylinder eines Verbrennungsmotors, mit folgenden Schritten: Einstellen oder Bestimmen einer Füllung in einem der Zylinder des Verbrennungsmotors; Ermitteln einer Angabe über eine Drehzahlabnahme des Verbrennungsmotors aufgrund eines Kompressionstakts des Zylinders; und Ermitteln eines Verdichtungsverhältnisses abhängig von der Angabe über die Drehzahlabnahme sowie abhängig von der eingestellten oder bestimmten Füllung des Zylinders.

Die US 6,453,854 B1 lehrt, dass die Funktionalität einer Vorrichtung zum variablen Einstellen eines Zylinderkompressionsverhältnisses einfach und ohne speziellen Sensor überwacht werden kann, indem die Drehungleichförmigkeit sowohl vor als auch nach dem Steuern der Vorrichtung zur Änderung des Zylinderkompressionsverhältnisses erfasst und die zwei Drehungleichförmigkeitswerte miteinander verglichen werden.

Es ist eine Aufgabe der Erfindung, eine Hubkolbenmaschine bzw. deren Betrieb zu verbessern.

Diese Aufgabe wird durch ein Verfahren bzw. System gemäß den unabhängigen Ansprüchen gelöst. Anspruch 10 stellt ein Kraftfahrzeug mit einem hier beschriebenen System unter Schutz, vorteilhafte Ausführungsformen sind Gegenstand der Unteransprüche.

Die Lehre der Ansprüche wird ausdrücklich zu einem Teil der Beschreibung gemacht.

Dem liegen insbesondere die beiden Erkenntnisse zugrunde, dass ein Verdichtungsverhältnis, insbesondere eine Veränderung eines Verdichtungsverhältnisses, eine Drehungleichförmigkeit der Hubkolbenmaschine in charakteristischer Weise beeinflusst und dass somit umgekehrt auf Basis einer Drehungleichförmigkeit ein Verdichtungsverhältnis und insbesondere auf Basis einer Veränderung einer Drehungleichförmigkeit eine Veränderung des Verdichtungsverhältnisses in, insbesondere messtechnisch, vorteilhafter Weise ermittelt werden kann. Insbesondere kann ein höheres bzw. niedrigeres Verdichtungsverhältnis eines oder mehrerer Zylinder dynamische Kräfte, insbesondere Trägheits- bzw. Beschleunigungskräfte, strömungstechnisch(induziert)e Kräfte, insbesondere Kompressions- und/oder Dekompressionskräfte, und/oder Reibungskräfte an dessen bzw. deren Kolben, Pleuel und dergleichen verändern und so, insbesondere signifikant in bestimmten, jeweils zylinderspezifischen Kurbelwinkelbereichen, eine, insbesondere zylinderinduzierte, Drehungleichförmigkeit charakteristisch beeinflussen.

Die Hubkolbenmaschine ist in einer Ausführung eine Hubkolben-Brennkraftmaschine, insbesondere ein aufgeladener oder nicht aufgeladener Zwei- oder Viertakt-, insbesondere Otto- oder Dieselmotor, insbesondere eines Kraftfahrzeugs, insbesondere eines Personenkraftwagens.

In einer Ausführung ist das Verdichtungsverhältnis eines oder mehrerer, insbesondere aller, Zylinder der Hubkolbenmaschine, insbesondere individuell oder einheitlich, insbesondere gemeinsam, verstellbar, insbesondere reversibel zwischen einem minimalen und einem maximalen Verdichtungsverhältnis. Werden die Verdichtungsverhältnisse aller Zylinder der Hubkolbenmaschine einheitlich verstellt, prägen die Zylinder dieselbe(n Veränderungen der) Drehungleichförmigkeit auf, was in einer Ausführung die Ermittlung des Verdichtungsverhältnis-Parameters verbessern kann.

In einer Ausführung hängt der ein- oder mehrdimensionale Drehungleichförmigkeits-Parameter von einer Drehungleichförmigkeit der Kurbelwelle ab, insbesondere wenigstens einer maximalen und/oder minimalen Drehungleichförmigkeit und/oder in wenigstens einem vorgegebenen Kurbelwinkelbereich, in einer Weiterbildung quantifiziert er diese. Eine Drehungleichförmigkeit im Sinne der vorliegenden Erfindung hängt in einer Ausführung von einer Variation einer, insbesondere Dreh- bzw. Winkel-, Geschwindigkeit der Kurbelwelle, insbesondere einer Beschleunigung und/oder Abweichung von, insbesondere Differenz zu, einem Geschwindigkeitsreferenzwert, insbesondere Geschwindigkeitsmittelwert, und/oder über der Zeit und/oder einem Kurbel(wellen)winkel, ab, sie kann diese insbesondere angeben, insbesondere sein. In einer Ausführung ist die Drehungleichförmigkeit eine, insbesondere auch, insbesondere wenigstens im Wesentlichen, durch Zylinder der Hubkolbenmaschine bzw. deren Wirkung induzierte Drehungleichförmigkeit.

In einer Ausführung hängt der ein- oder mehrdimensionale Verdichtungsverhältnis-Parameter von dem Verdichtungsverhältnis eines oder mehrerer, insbesondere aller, Zylinder der Hubkolbenmaschine und/oder dessen Veränderung ab, in einer Weiterbildung gibt der Verdichtungsverhältnis-Parameter ein Verdichtungsverhältnis eines oder mehrerer, insbesondere aller, Zylinder der Hubkolbenmaschine und/oder dessen Veränderung an, insbesondere ein oder mehrere individuelle Verdichtungsverhältnisse einzelner Zylinder und/oder deren Veränderungen und/oder ein über zwei oder mehr, insbesondere alle, Zylinder gemitteltes Verdichtungsverhältnis und/oder dessen Veränderung, ein maximales und/oder minimales Verdichtungsverhältnis von zwei oder mehr, insbesondere allen Zylindern und/oder dessen Veränderung oder dergleichen.

In einer Ausführung erfolgt die Ermittlung eines Wertes des Verdichtungsverhältnis-Parameters auf Basis (wenigstens) eines Drehungleichförmigkeits-Parameter-Wertes mittels einer, insbesondere empirisch und/oder rechnerisch, insbesondere durch Simulation, vorgegebenen Zuordnung zwischen Drehungleichförmigkeits-Parameter- und Verdichtungsverhältnis-Parameter-Werten, insbesondere mittels eines Kennfeldes, eines funktionalen Zusammenhangs oder dergleichen.

Nach einer Ausführung der vorliegenden Erfindung weist das Verfahren die Arbeitsschritte auf:

- Verstellen eines Soll-Verdichtungsverhältnisses eines ersten oder mehrerer, insbesondere aller, Zylinder der Hubkolbenmaschine von einem ersten, insbesondere extremalen, insbesondere minimalen oder maximalen, Wert auf einen zweiten, insbesondere extremalen, insbesondere maximalen oder minimalen, Wert;

- Ermitteln des ersten Drehungleichförmigkeits-Parameter-Wertes für den, insbesondere bei dem, ersten Soll-Verdichtungsverhältnis-Wert;

- Ermitteln eines zweiten Wertes des(selben) Drehungleichförmigkeits-Parameters für den, insbesondere bei dem, zweiten Soll-Verdichtungsverhältnis-Wert; und

- Ermitteln des Verdichtungsverhältnis-Parameter-Wertes auf Basis des ersten und zweiten Drehungleichförmigkeits-Parameter-Wertes, insbesondere einer Abweichung, insbesondere Differenz, zwischen dem ersten und zweiten Drehungleichförmigkeits-Parameter-Wert.

Entsprechend weist in einer Ausführung das System auf:

- Mittel zum Verstellen eines bzw. des Soll-Verdichtungsverhältnisses eines ersten oder mehrerer, insbesondere aller, Zylinder der Hubkolbenmaschine von einem bzw. dem ersten, insbesondere extremalen, insbesondere minimalen oder maximalen, Wert auf einen bzw. den zweiten, insbesondere extremalen, insbesondere maximalen oder minimalen, Wert;

- Mittel zum Ermitteln des ersten Drehungleichförmigkeits-Parameter-Wertes für den, insbesondere bei dem, ersten Soll-Verdichtungsverhältnis-Wert;

- Mittel zum Ermitteln eines bzw. des zweiten Wertes des(selben) Drehungleichförmigkeits-Parameters für den, insbesondere bei dem, zweiten Soll-Verdichtungsverhältnis-Wert; und

- Mittel zum Ermitteln des Verdichtungsverhältnis-Parameter-Wertes auf Basis des ersten und zweiten Drehungleichförmigkeits-Parameter-Wertes, insbesondere einer Abweichung, insbesondere Differenz, zwischen dem ersten und zweiten Drehungleichförmigkeits-Parameter-Wert.

Hierdurch kann in einer Ausführung vorteilhaft eine Veränderung bzw. Verstellung des Verdichtungsverhältnisses kontrolliert, insbesondere eine F(ehl)unktion eines Verstellmechanismus zum Verstellen des Verdichtungsverhältnisses diagnostiziert, werden.

In einer Weiterbildung umfasst das Verstellen des Soll-Verdichtungsverhältnisses von dem ersten auf den zweiten Wert das Vorgeben des ersten (Soll-)Wertes und/oder das, insbesondere anschließende oder vorhergehende, Vorgeben des zweiten (Soll-)Wertes.

Zusätzlich oder alternativ weist in einer Weiterbildung das Verstellen eines bzw. des Soll-Verdichtungsverhältnisses den Arbeitsschritt auf:

- Verändern einer Soll-Länge eines Pleuels (wenigstens) des ersten Zylinders, insbesondere mehrerer, insbesondere aller, Zylinder der Hubkolbenmaschine, insbesondere einheitlich oder individuell.

Entsprechend weist in einer Ausführung das System auf:

- Mittel zum Verändern einer Soll-Länge eines Pleuels (wenigstens) des ersten Zylinders, insbesondere mehrerer, insbesondere aller, Zylinder der Hubkolbenmaschine, insbesondere einheitlich oder individuell.

Hierdurch kann in einer Ausführung das Verdichtungsverhältnis vorteilhaft verstellt werden. Diesbezüglich wird ergänzend Bezug auf die eingangs genannte WO 2015/055582 A2 genommen und deren Inhalt ausdrücklich in die vorliegende Offenbarung einbezogen.

Nach einer Ausführung der vorliegenden Erfindung werden/wird der erste und/oder zweite Drehungleichförmigkeits-Parameter-Wert für einen, insbesondere bei einem, unbefeuerten Betrieb eines bzw. des ersten oder mehrerer, insbesondere aller, Zylinder(s) der Hubkolbenmaschine ermittelt.

Hierdurch können in einer Ausführung vorteilhaft Referenzrandbedingungen eingehalten werden. Zusätzlich oder alternativ kann in einer Ausführung durch ein Verstellen des Soll-Verdichtungsverhältnisses von dem ersten auf den zweiten Wert bei unbefeuertem bzw.

Schubbetrieb der Hubkolbenmaschine eine Störung einer Abgabeleistung der Hubkolbenmaschine reduziert, vorzugsweise vermieden, werden.

Nach einer Ausführung der vorliegenden Erfindung weist das Verfahren die Arbeitsschritte auf:

- Erfassen eines Kurbelwinkels der Kurbelwelle und/oder wenigstens einer, insbesondere ersten und/oder höheren, Zeitableitung bzw. zeitlichen Veränderung des Kurbelwinkels, insbesondere einer Geschwindigkeit und/oder Beschleunigung der Kurbelwelle, insbesondere mittels eines Winkel- und/oder Geschwindigkeits- und/oder Beschleunigungssensors und/oder durch, insbesondere numerische, Differentiation und/oder über dem Kurbelwinkel; und

- Ermitteln des ersten und/oder zweiten Drehungleichförmigkeits-Parameter-Wertes auf Basis bzw. in Abhängigkeit von dem erfassten Kurbelwinkel und/oder der wenigstens einen Zeitableitung.

Entsprechend weist in einer Ausführung das System auf:

- Mittel zum Erfassen eines bzw. des Kurbelwinkels der Kurbelwelle und/oder wenigstens einer bzw. der, insbesondere ersten und/oder höheren, Zeitableitung des Kurbelwinkels, insbesondere einer bzw. der Geschwindigkeit und/oder Beschleunigung der Kurbelwelle, insbesondere mittels eines bzw. des Winkel- und/oder Geschwindigkeits- und/oder Beschleunigungssensors und/oder durch, insbesondere numerische, Differentiation und/oder über dem Kurbelwinkel; und
- Mittel zum Ermitteln des ersten und/oder zweiten Drehungleichförmigkeits-Parameter-Wertes auf Basis bzw. in Abhängigkeit von dem erfassten Kurbelwinkel und/oder der wenigstens einen Zeitableitung.

In einer Ausführung kann hierzu vorteilhafterweise ein Mittel, insbesondere Sensor, zum Erfassen einer Kurbelwellen(winkel)lage und/oder -geschwindigkeit verwendet werden, der bereits zu anderen Zwecken vorgesehen ist und hierdurch eine weitere Funktionalität übernimmt.

Erfindungsgemäß wird der erfasste Kurbelwinkel und/oder die wenigstens eine Zeitableitung, insbesondere numerisch, gefiltert und der erste Drehungleichförmigkeits-Parameter-Wert auf Basis des gefilterten Kurbelwinkels und/oder der wenigstens einen gefilterten Zeitableitung ermittelt. In einer Ausführung werden/wird der erfasste Kurbelwinkel und/oder die wenigstens eine Zeitableitung, insbesondere numerisch, gefiltert und der zweite Drehungleichförmigkeits-Parameter-Wert auf Basis des gefilterten Kurbelwinkels und/oder der wenigstens einen gefilterten Zeitableitung ermittelt. In einer Weiterbildung werden nicht zylinderinduzierte Anteile durch das Filtern wenigstens teilweise reduziert bzw. der erfasste Kurbelwinkel und/oder die wenigstens eine Zeitableitung entsprechend gefiltert.

Entsprechend weist in einer Ausführung das System Mittel zum, insbesondere numerischen, Filtern des erfassten Kurbelwinkels und/oder der wenigstens einen Zeitableitung, insbesondere derart, dass nicht zylinderinduzierte Anteile durch das Filtern wenigstens teilweise reduziert werden, und Mittel zum Ermitteln des ersten und/oder zweiten Drehungleichförmigkeits-Parameter-Wertes auf Basis des gefilterten Kurbelwinkels und/oder der wenigstens einen Zeitableitung auf.

Hierdurch können in einer Ausführung die Qualität und/oder Signifikanz der ermittelten Drehungleichförmigkeits-Parameter-Werte verbessert und/oder der Einfluss von Mess- und/oder anderen Störungen, insbesondere durch stochastische oder systematische Schwingungen oder dergleichen, reduziert werden.

Gemäß der vorliegenden Erfindung werden/wird der erste und vorzugsweise auch der zweite Drehungleichförmigkeits-Parameter-Wert für einen oder mehrere bzw. über einem oder mehreren vorgegebenen Kurbelwinkelbereichen ermittelt bzw. weist das System Mittel zum Ermitteln des ersten und vorzugsweise auch des zweiten Drehungleichförmigkeits-Parameter-Wertes für einen oder mehrere bzw. über einem oder mehreren vorgegebenen Kurbelwinkelbereichen auf.

Ein bzw. der vorgegebener Kurbelwinkelbereich weist erfindungsgemäß, insbesondere jeweils, einen oberen und/oder unteren Totpunkt eines, insbesondere des ersten, Zylinders der Hubkolbenmaschine auf. In einer Weiterbildung weist ein vorgegebener Kurbelwinkelbereich einen oberen und/oder unteren Totpunkt des ersten Zylinders der Hubkolbenmaschine und wenigstens ein weiterer vorgegebener Kurbelwinkelbereich einen oberen und/oder unteren Totpunkt eines weiteren Zylinders der Hubkolbenmaschine auf.

Der Kurbelwinkelbereich zum Ermitteln des ersten Drehungleichförmigkeits-Parameter-Werts erstreckt sich über wenigstens 2° und höchstens 135°. Zusätzlich oder alternativ erstreckt sich ein bzw. der vorgegebene Kurbelwinkelbereich in einer Ausführung, insbesondere jeweils, über wenigstens 2°, insbesondere wenigstens 5°, insbesondere wenigstens 10°, und/oder höchstens 135°, insbesondere höchstens 90°, insbesondere höchstens 45°.

Hierdurch können in einer Ausführung besonders charakteristische Drehungleichförmigkeits-Parameter-Werte genutzt und so die Ermittlung des Verdichtungsverhältnis-Parameter-Wertes verbessert werden.

Gemäß der vorliegenden Erfindung werden/wird der erste Drehungleichförmigkeits-Parameter-Wert auf Basis bzw. in Abhängigkeit von einem Mittelwert der Drehungleichförmigkeit ermittelt. Nach einer Ausführung der vorliegenden Erfindung werden/wird der erste und/oder zweite Drehungleichförmigkeits-Parameter-Wert auf Basis bzw. in Abhängigkeit von einem oder mehreren Mittel- und/oder einem oder mehreren Extremal-, insbesondere Maximal- und/oder Minimal-Werten, insbesondere der Drehungleichförmigkeit, ermittelt, er kann diese insbesondere angeben. In einer Weiterbildung werden/wird der erste und/oder zweite Drehungleichförmigkeits-Parameter-Wert auf Basis bzw. in Abhängigkeit von wenigstens einer Differenz zwischen zwei Mittel- und/oder Extremal-, insbesondere Maximal- und/oder Minimal-Werten, insbesondere der Drehungleichförmigkeit, ermittelt, er kann diese insbesondere angeben.

Hierdurch können in einer Ausführung besonders charakteristische Drehungleichförmigkeits-Parameter-Werte genutzt und so die Ermittlung des Verdichtungsverhältnis-Parameter-Wertes (weiter) verbessert werden.

Nach einer Ausführung der vorliegenden Erfindung wird ein Signal, insbesondere ein Diagnose- und/oder Steuersignal, ausgegeben, falls der Verdichtungsverhältnis-Parameter-Wert eine vorgegebene Bedingung erfüllt, insbesondere einen vorgegebenen oberen Grenzwert über- und/oder unteren Grenzwert unterschreitet und/oder außerhalb eines vorgegebenen Bereichs liegt.

Hierdurch kann in einer Ausführung vorteilhaft auf eine Detektion eines fehlerhaften Verdichtungsverhältnisses reagiert werden.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere eine Hubkolbenmaschine steuern und/oder überwachen kann.

Unter einem Steuern wird vorliegend insbesondere auch die Ausgabe von Steuersignalen auf Basis eines Vergleichs mit erfassten Ist-Werten, d.h. ein Regeln, verstanden.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

**Figur 1** einen Teil eines Kraftfahrzeugs nach einer Ausführung der vorliegenden Erfindung;

**Figur 2** eine Drehungleichförmigkeit über einem Kurbelwinkel einer Kurbelwelle des Kraftfahrzeugs für ein maximales und ein minimales Verdichtungsverhältnis; und

**Figur 3** ein Verfahren zur Diagnose einer Hubkolbenmaschine des Kraftfahrzeugs nach einer Ausführung der vorliegenden Erfindung.

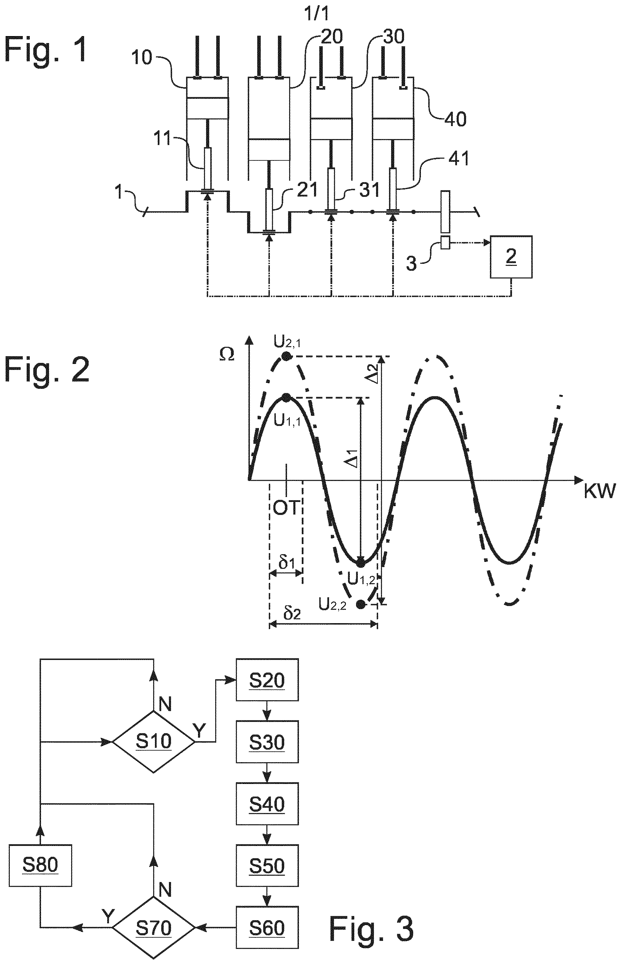

**Figur 1** zeigt einen Teil eines Kraftfahrzeugs mit einer Hubkolben-Brennkraftmaschine mit einem variablen Verdichtungsverhältnis und einem System zur Diagnose der Hubkolbenmaschine nach einer Ausführung der vorliegenden Erfindung.

Die Hubkolbenmaschine weist in an sich bekannter Weise eine Kurbelwelle 1 und mehrere Zylinder 10, 20, 30 und 40 auf, in denen Kolben abwechselnd ein Kraftstoff-LuftGemisch verdichten (vgl. Zylinder 10), durch Verbrennung des Gemisches angetrieben werden (vgl. Zylinder 20), Luft oder Gemisch ansaugen (vgl. Zylinder 30) und ausstoßen (vgl. Zylinder 40) und hierzu über Pleuel 11,21,31 bzw. 41 mit der Kurbelwelle 1 gekoppelt sind.

Die Länge der Pleuel 11, 21, 31, 41 und damit das Verdichtungsverhältnis der Zylinder 10, 20, 30 bzw. 40 bzw. der Hubkolben-Brennkraftmaschine ist durch eine Motor-ECU 2 verstellbar, wie in Fig. 1 strichpunktiert angedeutet.

Die ECU 2 erfasst mittels eines Triggerrads 3 einen Kurbelwinkel KW und ermittelt hieraus Drehungleichförmigkeits-Parameter-Werte.

**Figur 2** zeigt exemplarisch eine durch die ECU 2 ermittelte Drehungleichförmigkeit $\Omega$ für ein maximales Verdichtungsverhältnis (ausgezogen in Fig. 2) und ein minimales Verdichtungsverhältnis (strichpunktiert in Fig. 2). Die Drehungleichförmigkeit $\Omega$ kann beispielsweise eine Variation einer Kurbelwellengeschwindigkeit über Kurbelwinkel $\frac{dKW}{dt}(KW)$, eine Kurbelwellenbeschleunigung über Kurbelwinkel $\frac{d^2KW}{dt^2}(KW)$ oder dergleichen sein.

Die Verläufe illustrieren exemplarisch, dass eine Drehungleichförmigkeit $\Omega$ der Kurbelwelle 1 in charakteristischer Weise von dem aktuellen Verdichtungsverhältnis abhängt, sich insbesondere in charakteristischer Weise mit dem eingestellten Verdichtungsverhältnis verändert.

Die ECU 2 führt ein nachfolgend mit Bezug auf **Figur 3** erläutertes Verfahren zur Diagnose der Hubkolbenmaschine nach einer Ausführung der vorliegenden Erfindung durch bzw. ist hierzu hard- und softwaremäßig eingerichtet.

In einem Schritt S10 prüft die ECU 2 bzw. das Verfahren, ob eine Diagnosebedingung erfüllt ist, insbesondere die Hubkolbenmaschine sich in einem unbefeuerten Schubbetrieb befindet oder nicht.

In einer Weiterbildung kann die Diagnosebedingung zusätzlich eine zyklische Durchführung des Verfahrens implementieren, insbesondere einmal in einem vorgegebenen Fahrzyklus, beispielsweise, indem zusätzlich ein entsprechender (Fahr)Zyklus-Kennzeichner bzw. -Flag abgeprüft wird. Entsprechend werden die nachfolgenden Schritte in einer Ausführung in jedem Schubbetrieb oder auch nur einmal pro Fahrzyklus durchgeführt.

Falls die Diagnosebedingung nicht erfüllt ist (S10: "N"), wiederholt die ECU 2 bzw. das Verfahren Schritt S10. Andernfalls fährt sie bzw. das Verfahren mit Schritt S20 fort.

In diesem gibt sie bzw. das Verfahren (durch entsprechende Soll-Vorgabe für die Verstellung der Pleuellängen) ein maximales Soll-Verdichtungsverhältnis der (Zylinder 10, 20, 30, 40 der) Hubkolbenmaschine vor, erfasst für bzw. bei diesem Soll-Verdichtungsverhältnis eine zeitliche Abfolgen von Kurbelwinkeln KW(t) und ermittelt unter numerischer Filterung hieraus die Drehungleichförmigkeit $\Omega$ der Kurbelwelle 1 (ausgezogen in Fig. 2).

Hieraus ermittelt sie bzw. das Verfahren in einem Schritt S30 einen ersten Wert eines Drehungleichförmigkeits-Parameters.

Dies kann beispielsweise ein Maximalwert $U_{1,1}$ der Drehungleichförmigkeit $\Omega$ in einem vorgegebenen Kurbelwinkelbereich $\delta_1$ um einen oberen Totpunkt OT eines ersten Zylinders 10, ein Minimalwert $U_{1,2}$ der Drehungleichförmigkeit $\Omega$ in einem vorgegebenen Kurbelwinkelbereich $\delta_2$, der den oberen Totpunkt OT aufweist, eine Differenz $\Delta_1$ zwischen Maximal- und Minimalwert in dem vorgegebenen Kurbelwinkelbereich $\delta_2$ oder dergleichen sein.

In einem Schritt S40 gibt sie bzw. das Verfahren (durch entsprechende Soll-Vorgabe für die Verstellung der Pleuellängen) ein minimales Soll-Verdichtungsverhältnis der (Zylinder 10, 20, 30, 40 der) Hubkolbenmaschine vor und ermittelt für bzw. bei diesem Soll-Verdichtungsverhältnis aus der erfassten zeitlichen Abfolgen von Kurbelwinkeln unter numerischer Filterung wieder die Drehungleichförmigkeit $\Omega$ der Kurbelwelle 1 (strichpunktiert in Fig. 2).

Hieraus ermittelt sie bzw. das Verfahren in einem Schritt S50 in zu Schritt S30 analoger Weise einen zweiten Wert desselben Drehungleichförmigkeits-Parameters, also beispielsweise einen Maximalwert $U_{2,1}$ der Drehungleichförmigkeit $\Omega$ in dem vorgegebenen Kurbelwinkelbereich $\delta_1$ um den oberen Totpunkt OT des ersten Zylinders 10, einen Minimalwert $U_{2,2}$ der Drehungleichförmigkeit $\Omega$ in dem vorgegebenen Kurbelwinkelbereich $\delta_2$ oder eine Differenz $\Delta_2$ zwischen Maximal- und Minimalwert in dem vorgegebenen Kurbelwinkelbereich $\delta_2$.

Dann ermittelt die ECU 2 bzw. das Verfahren in einem Schritt S60 auf Basis des ersten und zweiten Drehungleichförmigkeits-Parameters-Wertes, beispielsweise einer Differenz zwischen den beiden Werten ($U_{2,1}$ - $U_{1,1}$), ($U_{2,2}$ - $U_{1,2}$) oder ($\Delta_2$ - $\Delta_1$), einen Verdichtungsverhältnis-Parameter-Wert, der beispielsweise proportional zu dieser Differenz ist und von einer Veränderung des Verdichtungsverhältnisses abhängt bzw. diese angibt.

In einem Schritt S70 prüft die ECU 2 bzw. das Verfahren, ob dieser Verdichtungsverhältnis-Parameter-Wert außerhalb eines vorgegebenen Bereichs liegt, insbesondere einen vorgegebenen Mindestwert unterschreitet, der sich bei einer Verstellung des Verdichtungsverhältnisses zwischen maximalem und minimalem Wert wenigstens ergeben sollte.

Ist dies nicht der Fall bzw. liegt der Verdichtungsverhältnis-Parameter-Wert innerhalb des vorgegebenen Bereichs (S70: "N"), kehrt die ECU 2 bzw. das Verfahren zu Schritt S10 zurück, um das Verfahren bei Vorliegen der Diagnosebedingung erneut durchzuführen, beispielsweise in einem nachfolgenden Fahrzyklus oder Schubbetrieb.

Andernfalls bzw. bei einer zu geringen Abweichung zwischen den Drehungleichförmigkeits-Parameter-Werten für maximales und minimales Soll-Verdichtungsverhältnis bzw. deren Differenzen (S70: "Y") gibt die ECU 2 bzw. das Verfahren in einem Schritt S80 ein entsprechendes Diagnosesignal aus, das eine unzureichende bzw. Fehlfunktion des Verstellmechanismus anzeigt, und kehrt dann zu Schritt S10 zurück.

Obwohl in der vorhergehenden Beschreibung exemplarische Ausführungen erläutert wurden, sei darauf hingewiesen, dass eine Vielzahl von Abwandlungen möglich ist.

So wurden im Ausführungsbeispiel die Soll-Längen aller Pleuel 11, 21, 31 und 41 bzw. die Soll-Verdichtungsverhältnisse aller Zylinder 10, 20, 30 und 40 einheitlich verstellt und nur für den ersten Zylinder 10 hieraus resultierende Abweichungen der Drehungleichförmigkeit $\Omega$ der Kurbelwelle 1 berücksichtigt.

In einer Abwandlung kann das vorstehend beschriebene Verfahren für jeden der (anderen) Zylinder in analoger Weise durchgeführt, insbesondere deren obere und/oder unteren Totpunkte ebenfalls berücksichtigt und in Schritt S80 eine, insbesondere differenzierte bzw. individuelle, Diagnosemeldung ausgegeben werden, wenn (wenigstens) für einen der Zylinder 10, 20, 30 und 40 eine unzureichende bzw. Fehlfunktion des entsprechenden Pleuels 11, 21, 31 bzw. 41 detektiert wird, insbesondere der entsprechende Zylinder angegeben werden. Liegt beispielsweise für den vorgegebenen Kurbelwinkelbereich $\delta_1$ des ersten Zylinders 10 die Differenz zwischen dem Maximalwert bei minimalen und maximalen Verdichtungsverhältnis in dem vorgegebenen Bereich, für einen entsprechenden weiteren vorgegebenen Kurbelwinkelbereich um den oberen Totpunkt eines weiteren Zylinders 20 hingegen nicht, so wird in der Abwandlung in Schritt S80 eine Fehlfunktion dieses Zylinders 20 ausgegeben.

Sofern die Pleuel bzw. Verdichtungsverhältnisse individuell verstellbar sind, kann in einer Abwandlung in den Schritten S20, S40 auch jeweils nur eine Soll-Länge bzw. ein Soll-Verdichtungsverhältnis für einen Zylinder verändert und dieser Zylinder diagnostiziert werden, wobei in einer Weiterbildung dieser Abwandlung alle Zylinder nacheinander entsprechend geprüft, d.h. die Schritte S10 - S80 individuell für alle Zylinder durchgeführt werden können.

In einer Abwandlung kann anstelle des Maximalwertes $U_{1,1}$ bzw. $U_{2,1}$ beispielsweise auch ein Mittelwert über dem vorgegebenen Kurbelwinkelbereich $\delta_1$ als Drehungleichförmigkeits-Parameter-Wert verwendet werden.

In einer Abwandlung kann das Verstellen der Soll-Länge bzw. des Soll-Verdichtungsverhältnis auch entfallen. So kann, wie insbesondere Fig. 2 veranschaulicht, auch beispielsweise aus den charakteristischen Drehungleichförmigkeits-Parameter-Werten $U_{1,1}$, $U_{1,2}$ oder $\Delta_1$ alleine bereits das Vorliegen eines maximalen Ist-Verdichtungsverhältnisses bzw. ein diesem entsprechender Verdichtungsverhältnis-Parameter-Wert ermittelt werden, aus $U_{2,1}$, $U_{2,2}$ oder $\Delta_2$ alleine bereits das Vorliegen eines minimalen Ist-Verdichtungsverhältnisses bzw. ein diesem entsprechender Verdichtungsverhältnis-Parameter-Wert, und aus Zwischenwerten hiervon entsprechende andere Ist-Verdichtungsverhältnisse bzw. entsprechende Verdichtungsverhältnis-Parameter-Werte.

Diese können in einer weiteren Abwandlung zusätzlich oder alternativ zur Steuerung, insbesondere Regelung, der Hubkolben-Brennkraftmaschine, insbesondere der Verdichtungsverhältnisverstellung, genutzt werden, beispielsweise, indem in Schritt S80 entsprechende Steuersignale ausgegeben werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Bezugszeichenliste

| 1 | Kurbelwelle |
| 2 | Motor-ECU |
| 3 | Triggerrad |
| 10; 20; 30; 40 | Zylinder |
| 11; 21; 31; 41 | Pleuel |
| KW | Kurbelwinkel |
| $\Omega$ | Drehungleichförmigkeit |
| OT | oberer Totpunkt |
| $\delta_1$; $\delta_2$ | vorgegebener Kurbelwinkelbereich |
| $U_{1,1}$; $U_{2,1}$ | Maximalwert |
| $U_{1,2}$; $U_{2,2}$ | Minimalwert |
| $\Delta_1$; $\Delta_2$ | Differenz |

## Patentansprüche

1. Verfahren zur Diagnose und/oder Steuerung einer Hubkolbenmaschine mit einem variablen Verdichtungsverhältnis, wobei das Verfahren die Arbeitsschritte aufweist:

   - Erfassen (S20) eines Kurbelwinkels (KW) einer Kurbelwelle der Hubkolbenmaschine und/oder wenigstens einer Zeitableitung hiervon, wobei der erfasste Kurbelwinkel und/oder die wenigstens eine Zeitableitung gefiltert und eine Drehungleichförmigkeit ($\Omega$) auf Basis des gefilterten Kurbelwinkels und/oder der wenigstens einen gefilterten Zeitableitung ermittelt wird, wobei die Drehungleichförmigkeit einer Variation einer Kurbelwellengeschwindigkeit über Kurbelwinkel dKW/dt (KW), oder einer Kurbelwellenbeschleunigung über Kurbelwinkel d2KW/dt2 (KW) entspricht,
   - Ermitteln (S30) eines ersten Drehungleichförmigkeits-Parameter-Werts, wobei ein Mittelwert der ermittelten Drehungleichförmigkeit ($\Omega$) über einen vorgegebenen Kurbelwinkelbereich ($\delta_1$) gebildet wird, der sich über wenigstens 2° und höchstens 135° erstreckt und der wenigstens eine vorgegebene Kurbelwinkelbereich ($\delta_1$) einen oberen Totpunkt (OT) oder einen unteren Totpunkt (UT) wenigstens eines, insbesondere des ersten, Zylinders (10) der Hubkolbenmaschine aufweist; und
   - Ermitteln (S60) eines Wertes eines Verdichtungsverhältnis-Parameters für die Hubkolbenmaschine auf Basis dieses ersten Drehungleichförmigkeits-Parameter-Werts.

2. Verfahren nach dem vorhergehenden Anspruch, welches die Arbeitsschritte aufweist:

   - Verstellen (S20, S40) eines Soll-Verdichtungsverhältnisses wenigstens eines ersten Zylinders (10) der Hubkolbenmaschine von einem ersten, insbesondere extremalen, Wert auf einen zweiten, insbesondere extremalen, Wert;
   - Ermitteln (S30) des ersten Drehungleichförmigkeits-Parameter-Wertes für den ersten Soll-Verdichtungsverhältnis-Wert;
   - Ermitteln (S50) eines zweiten Wertes des Drehungleichförmigkeits-Parameters für den zweiten Soll-Verdichtungsverhältnis-Wert; und

- Ermitteln (S60) des Verdichtungsverhältnis-Parameter-Wertes auf Basis des ersten und zweiten Drehungleichförmigkeits-Parameter-Wertes.

**3.** Verfahren nach dem vorhergehenden Anspruch, wobei das Verstellen eines Soll-Verdichtungsverhältnisses den Arbeitsschritt aufweist:

- Verändern (S20, S40) einer Soll-Länge eines Pleuels (11) des ersten Zylinders der Hubkolbenmaschine.

**4.** Verfahren nach einem der vorhergehenden Ansprüche, wobei der erste und/oder zweite Drehungleichförmigkeits-Parameter-Wert für einen unbefeuerten Betrieb wenigstens eines, insbesondere wenigstens des ersten, Zylinders (10) der Hubkolbenmaschine ermittelt wird.

**5.** Verfahren nach Anspruch 2 oder einem der darauf rückbezogenen Ansprüche, wobei der zweite Drehungleichförmigkeits-Parameter-Wert für wenigstens einen vorgegebenen Kurbelwinkelbereich ($\delta_2$) ermittelt wird.

**6.** Verfahren nach Anspruch 5, wobei der wenigstens eine vorgegebene Kurbelwinkelbereich ($\delta_2$) einen oberen und/oder unteren Totpunkt (OT) wenigstens eines, insbesondere des ersten, Zylinders (10) der Hubkolbenmaschine aufweist und/oder sich über wenigstens 2° und/oder höchstens 135° erstreckt.

**7.** Verfahren nach einem der vorhergehenden Ansprüche, wobei der zweite Drehungleichförmigkeits-Parameter-Wert des Weiteren auf Basis wenigstens eines Extremal-Wertes ermittelt wird.

**8.** Verfahren nach einem der vorhergehenden Ansprüche, wobei ein Signal, insbesondere ein Diagnose- und/oder Steuersignal, ausgegeben wird (S80), falls der Verdichtungsverhältnis-Parameter-Wert eine vorgegebene Bedingung erfüllt.

**9.** System (2, 3) zur Diagnose und/oder Steuerung einer Hubkolbenmaschine mit einem variablen Verdichtungsverhältnis, das zur Durchführung eines Verfahrens nach einem der vorhergehenden Ansprüche eingerichtet ist.

**10.** Kraftfahrzeug, insbesondere Personenkraftwagen, mit einer Hubkolbenmaschine mit einem variablen Verdichtungsverhältnis und einem System nach dem vorhergehenden Anspruch zur Diagnose und/oder Steuerung der Hubkolbenmaschine.

**Claims**

**1.** Method for diagnosis and/or control of a reciprocating engine having a variable compression ratio, wherein the method comprises the following working stages:

- acquisition (S20) of a crank angle (KW) of a crankshaft of the reciprocating engine and/or at least one time derivative thereof, wherein the acquired crank angle and/or the at least one time derivative is filtered and a rotational non-uniformity ($\Omega$) is determined based on the filtered crank angle and/or the at least one filtered time derivative, wherein the rotational non-uniformity corresponds to a variation in a crankshaft speed over the crank angle dKW/dt (KW), or a crankshaft acceleration over the crank angle d2KW/dt2 (KW),

- determination (S30) of a first rotational non-uniformity parameter value, wherein an average value of the determined rotational non-uniformity ($\Omega$) is formed over a predetermined crank angle range ($\delta_1$) which extends over at least 2° and at the most 135° and the at least one predetermined crank angle range ($\delta_1$) has a top dead centre (TDC) or a bottom dead centre (BDC) of at least one, in particular the first, cylinder (10) of the reciprocating engine; and

- determination (S60) of a value of a compression ratio parameter for the reciprocating engine based on this first rotational non-uniformity parameter value.

**2.** Method according to the preceding claim, comprising the following working stages:

- adjustment (S20, S40) of a target compression ratio of at least a first cylinder (10) of the reciprocating engine from a first, in particular extreme, value to a second, in particular extreme, value;

- determination (S30) of the first rotational non-uniformity parameter value for the first theoretical compression ratio value;

- determination (S50) of a second value of the rotational non-uniformity parameter for the second theoretical compression ratio value; and

- determination (S60) of the compression ratio parameter value based on the first and second rotational non-uniformity parameter value.

**3.** Method according to the preceding claim, wherein the adjustment of a theoretical compression ratio comprises the following working stage:

- changing (S20, S40) a theoretical length of a connecting rod (11) of the first cylinder of the reciprocating engine.

4. Method according to any one of the preceding claims, wherein the first and/or second rotational non-uniformity parameter value is determined for unfired operation of at least one, in particular at least the first, cylinder (10) of the reciprocating engine.

5. Method according to claim 2 or any one of the claims referring thereto, wherein the second rotational non-uniformity parameter value is determined for at least one predetermined crank angle range ($\delta_2$).

6. Method according to claim 5, wherein the at least one predetermined crank angle range ($\delta_2$) has a top and/or bottom dead centre (TDC) of at least one, in particular the first, cylinder (10) of the reciprocating engine and/or extends over at least 2° and/or at the most 135°.

7. Method according to any one of the preceding claims, wherein the second rotational non-uniformity parameter value is further determined based on at least one extreme value.

8. Method according to any of the preceding claims, wherein a signal, in particular a diagnostic and/or control signal, is emitted (S80) if the compression ratio parameter value fulfils a predetermined condition.

9. System (2, 3) for diagnosing and/or controlling a reciprocating engine with a variable compression ratio, which is set up to implement a method according to any one of the preceding claims.

10. A motor vehicle, in particular an automobile, comprising a reciprocating engine with a variable compression ratio and a system according to the preceding claim for diagnosing and/or controlling the reciprocating engine.

**Revendications**

1. Procédé de diagnostic et/ou de commande d'un moteur à pistons alternatifs avec un rapport de compression variable, dans lequel le procédé présente les étapes de travail :

    - de détection (S20) d'un angle de vilebrequin (KW) d'un vilebrequin du moteur à pistons alternatifs et/ou d'au moins une dérivée de celui-ci, dans lequel l'angle de vilebrequin détecté et/ou l'au moins une dérivée sont filtrés et une irrégularité de rotation ($\Omega$) est déterminée sur la base de l'angle de vilebrequin filtré et/ou de l'au moins une dérivée filtrée,

dans lequel l'irrégularité de rotation correspond à une variation d'une vitesse de vilebrequin sur l'angle de vilebrequin dKW/dt (KW) ou à une accélération de vilebrequin sur l'angle de vilebrequin d2KW/dt2 (KW),

    - de détermination (S30) d'une première valeur de paramètre d'irrégularité de rotation, dans lequel une valeur moyenne de l'irrégularité de rotation ($\Omega$) déterminée est obtenue sur une plage d'angles de vilebrequin ($\delta_1$) prédéfinie qui s'étend sur au moins 2° et au maximum 135° et l'au moins une plage d'angles de vilebrequin ($\delta_1$) prédéfinie présente un point mort supérieur (OT) ou un point mort inférieur (UT) d'au moins un, en particulier du premier, cylindre (10) du moteur à pistons alternatifs ; et

    - de détermination (S60) d'une valeur d'un paramètre de rapport de compression pour le moteur à pistons alternatifs sur la base de ladite première valeur de paramètre d'irrégularité de rotation.

2. Procédé selon la revendication précédente, lequel présente les étapes de travail :

    - d'ajustement (S20, S40) d'un rapport de compression théorique d'au moins un premier cylindre (10) du moteur à pistons alternatifs depuis une première valeur, en particulier extrême, sur une deuxième valeur, en particulier extrême ;

    - de détermination (S30) de la première valeur de paramètre d'irrégularité de rotation pour la première valeur de rapport de compression théorique ;

    - de détermination (S50) d'une deuxième valeur du paramètre d'irrégularité de rotation pour la deuxième valeur de rapport de compréhension théorique ; et

    - de détermination (S60) de la valeur de paramètre de rapport de compression sur la base de la première et de la deuxième valeur de paramètre d'irrégularité de rotation.

3. Procédé selon la revendication précédente, dans lequel l'ajustement d'un rapport de compression théorique présente l'étape de travail :

    - de modification (S20, S40) d'une longueur théorique d'une bielle (11) du premier cylindre du moteur à pistons alternatifs.

4. Procédé selon l'une quelconque des revendications précédentes, dans lequel la première et/ou la deuxième valeur de paramètre d'irrégularité de rotation sont déterminées pour un fonctionnement sans combustion d'au moins un, en particulier d'au moins le premier, cylindre (10) du moteur à pistons alternatifs.

**5.** Procédé selon la revendication 2 ou l'une des revendications s'y rapportant, dans lequel la deuxième valeur de paramètre d'irrégularité de rotation est déterminée pour au moins une plage d'angles de vilebrequin ($\delta_2$) prédéfinie.

**6.** Procédé selon la revendication 5, dans lequel l'au moins une plage d'angles de vilebrequin ($\delta_2$) prédéfinie présente un point mort (OT) supérieur et/ou inférieur d'au moins un premier, en particulier du premier, cylindre (10) du moteur à pistons alternatifs et/ou s'étend sur au moins 2° et/ou au maximum 135°.

**7.** Procédé selon l'une quelconque des revendications précédentes, dans lequel la deuxième valeur de paramètre d'irrégularité de rotation est déterminée par ailleurs sur la base d'au moins une valeur extrême.

**8.** Procédé selon l'une quelconque des revendications précédentes, dans lequel un signal, en particulier un signal de diagnostic et/ou de commande, est émis (S80) si la valeur de paramètre de rapport de compression remplit une condition prédéfinie.

**9.** Système (2, 3) de diagnostic et/ou de commande d'un moteur à pistons alternatifs avec un rapport de compression variable qui est mis au point pour mettre en oeuvre un procédé selon l'une quelconque des revendications précédentes.

**10.** Véhicule à moteur, en particulier véhicule de tourisme, avec un moteur à pistons alternatifs avec un rapport de compression variable et un système selon la revendication précédente pour le diagnostic et/ou la commande du moteur à pistons alternatifs.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015055582 A2
- DE 102014203033 A1
- US 6453854 B1